# EUROPEAN PATENT APPLICATION

(11) **EP 2 034 056 A1**
(43) Date of publication of application: **11.03.2009**
(21) Application number: 07115591.5
(22) Date of filing: 04.09.2007
(51) Int. Cl.: D01D 5/098, D01F 1/10, D01F 6/06, D01F 6/46, D01F 8/06

(54) **Metallocene polypropylene fibers and nonwovens with improved mechanical properties.**

(71) Applicant: TOTAL PETROCHEMICALS RESEARCH FELUY, 7181 Seneffe (Feluy) (BE)
(72) Inventor: Standaert, Alain, 1020 Bruxelles (BE); Pavy, Guillaume, 1060 Bruxelles (BE); Haubruge, Hugues, 1457 Walhain (BE); Lhost, Olivier, 7021 Havré (BE)
(74) Representative: Leyder, Francis

(57) **Abstract**

The present invention relates to as-spun fibers and filaments comprising a nucleated metallocene polypropylene. Said fibers and filaments are characterized by improved mechanical properties. The present invention also relates to nonwovens made with such fibers and filaments and to a process for making such fibers and filaments.

## Description

### Field of the invention

The present invention relates to as-spun fibers and filaments comprising a nucleated metallocene polypropylene. Said fibers and filaments are characterized by improved mechanical properties. The present invention also relates to nonwovens comprising such fibers and filaments and to a process for making such fibers and filaments.

### The technical problem and the prior art

The combination of mechanical and physical properties together with good processability has made polypropylene the material of choice for a large number of fiber and nonwoven applications, such as for construction and agricultural industries, sanitary and medical articles, carpets, textiles.

The polypropylenes used for fibers and nonwovens have a melt flow that - depending upon the production method, final use etc. - can be in the range from 5 dg/min for very strong high-tenacity fibers up to several thousand dg/min for meltblown nonwovens. Typically, the polypropylenes used in fiber extrusion have a melt flow in the range from 5 dg/min to about 40 dg/min. The polypropylenes typically used for spunbond nonwovens have a melt flow index in the range from 25 dg/min to 40 dg/min and are additionally characterized by a narrow molecular weight distribution (Polypropylene Handbook, ed. Nello Pasquini, 2nd edition, Hanser, 2005, p. 397). The polypropylenes typically used for meltblown nonwovens have a melt flow index in the range from 300 dg/min to 2000 dg/min.

While the traditionally used polypropylenes give fibers and nonwovens with acceptable properties, the demand for downgauging and productivity increases has resulted in the development of new polypropylenes giving fibers and nonwovens with improved properties.

Patent documents US 5,723,217 and US 5,736,465 disclose fibers and spunbonded or meltblown fabrics made from polypropylenes having been produced by single-site catalysis. These fibers and fabrics are characterized by improved mechanical properties when compared to fibers and fabrics made with polypropylenes produced by Ziegler-Natta catalysis.

While these developments have resulted in improving the properties of fibers and nonwovens, the continuing efforts to downgauge necessitate further improvements in fiber and nonwoven properties.

It is therefore an object of the present invention to provide such polypropylene fibers and nonwovens with further improved properties.

### Brief description of the invention

We have now discovered polypropylene fibers and nonwovens that are characterized by further improved properties.

Thus, the present invention provides as-spun fibers and filaments comprising a nucleated metallocene polypropylene.

Further, the present invention provides nonwovens and laminates comprising such fibers.

The present invention also provides a process for the production of as-spun fibers and filaments, said process comprising the steps of
(a) providing a blend comprising a metallocene polypropylene and a nucleating agent,
(b) feeding the blend of step (a) to an extruder,
(c) subsequently melt-extruding the blend to obtain a molten polymer stream,
(d) extruding the molten polymer stream of step (c) from a number of fine, usually circular, capillaries of a spinneret, thus obtaining filaments of molten polymer, and
(e) subsequently rapidly reducing the diameter of the filaments obtained in the previous step to a final diameter.

Further the present invention provides a process for the production of multicomponent as-spun fibers and filaments, said process comprising the steps of
(a1) providing a first blend comprising a metallocene polypropylene and a nucleating agent to a first extruder,
(a2) providing at least one further blend comprising a thermoplastic polymer,
(b1) feeding each of the blends of steps (a1) and (a2) to a separate extruder,
(c1) consecutively melt-extruding the blends to obtain a molten polymer stream for each blend,
(d1) co-extruding the molten polymer streams of step (c1) from a number of fine capillaries of a spinneret, thus obtaining multicomponent filaments of molten polymer, and
(e) subsequently rapidly reducing the diameter of the filaments obtained in the previous step to a final diameter.

### Detailed description of the invention

The polypropylene fibers and filaments of the present invention are produced as-spun by methods well known to the skilled person. Polypropylene is melted in an extruder, in general passed through a melt pump to ensure a constant feeding rate and then extruded through a number of fine capillaries of a spinneret. The still molten fibers and filaments are simultaneously cooled by air, drawn to a final diameter and collected. They are for example collected on a winder or other suitable collecting means. No further drawing step is conducted with the so-obtained fibers and filaments.

The nonwovens of the present invention may be produced by any suitable method. The preferred methods are the spunbonding process and the melt blown process. Of these the spunbonding process is the most preferred. In the spunbonding process as well as the melt blown process the extruded fibers and filaments are drawn in the molten state only. For the purposes of the present invention the fibers and filaments comprised in a spunbond nonwoven or a melt blown nonwoven are therefore considered to be as-spun fibers and filaments.

In the spunbonding process polypropylene is melted in an extruder, in general first passed through a melt pump to ensure a constant feeding rate and then extruded from a number of fine, usually circular, capillaries of a spinneret, thus obtaining filaments. The filament formation can either be done by using one single spinneret with a large number of holes, generally several thousand, or by using several smaller spinnerets with a correspondingly lower number of holes per spinneret. After exiting from the spinneret, the still molten filaments are quenched by a current of air. The diameter of the filaments is then quickly reduced by a flow of high-pressure air. Air velocities in this drawdown step can range up to several thousand meters per minute.

After drawdown the filaments are collected on a support, for example a forming wire or a porous forming belt, thus first forming an unbonded web, which is then passed through compaction rolls and finally through a bonding step. Bonding of the fabric may be accomplished by thermobonding, hydroentanglement, needle punching, or chemical bonding.

In the melt blown process the polypropylene is melted in an extruder, in general first passed through a melt pump to ensure a constant feeding rate and then through the capillaries of a special melt blowing die. Usually melt blown dies have a single line of usually circular capillaries through which the molten polymer passes. After exiting from the die, the still molten filaments are contacted with hot air at high speed, which rapidly draws the fibers and, in combination with cool air, solidifies the filaments. In the following, the nonwoven is formed by depositing the filaments directly onto a forming wire or a porous forming belt.

The fibers and filaments of the present invention may be multicomponent fibers. Preferably they are bicomponent fibers or filaments. Bi- or multi-component fibers or filaments are known in many different configurations, such as for example side-by-side, sheath-core, islands-in-the-sea, pie or stripe configurations. Bi- or multi-component fibers or filaments can be formed by coextrusion of at least two different components into one fiber or filament. This is done by feeding the different components to a corresponding number of extruders and combining the different melts into a single fiber or filament. The resulting fiber or filament has at least two different essentially continuous polymer phases. Such fibers or filaments, their production as well as their forming a nonwoven are well known to the skilled person and are for example described in F. Fourné, Synthetische Fasern, Carl Hanser Verlag, 1995, chapter 5.2 or in B.C. Goswami et al., Textile Yarns, John Wiley & Sons, 1977, p. 371 - 376.

Composites may be formed from two or more nonwovens, of which at least one is made in accordance with the present invention. In particular, the composites comprise a spunbond nonwoven layer (S) according to the present invention or a melt blown nonwoven layer (M) according to the present invention. Composites in accordance with the present invention can for example be SS, SSS, SMS, SMMSS or any other combination of spunbond and melt blown nonwoven layers.

A first nonwoven or composite, said first nonwoven or composite being in accordance with the present invention, and a film may be combined to form a laminate. The film preferably is a polyolefin film. The laminate is formed by bringing the first nonwoven or composite and the film together and laminating them to one another for example by passing them through a pair of lamination rolls. The laminates may further include a second nonwoven or composite, which can be but need not be according to the present invention, on the face of the film opposite to that of the first nonwoven or composite. In a preferred embodiment, the film of the laminate is a breathable polyolefin film, thus resulting in a laminate with breathable properties.

The polypropylene used in the present invention is either a homopolymer or a random copolymer of propylene with one or more comonomers, said comonomer being ethylene or a C₄ - C₁₀ alpha-olefin, such a butene-1, pentene-1, hexene-1, octene-1, 4-methyl-pentene-1. The preferred comonomers are ethylene and butene-1. The most preferred comonomer is ethylene. The random copolymer of the present invention comprises at least 0.1 % by weight, more preferably at least 0.2 % by weight and most preferably at least 0.5 % by weight of comonomer. It comprises at most 6 % by weight, preferably at most 5 % by weight and most preferably at most 3 % by weight of comonomer

The polypropylene used in the present invention is a metallocene polypropylene, i.e. it is produced by a metallocene-based catalytic system. The polymerization of propylene and one or more optional comonomers is performed with one or more metallocene-based catalytic systems comprising one or more metallocenes, a support and an activating agent. Such catalytic systems are commercially available and thus known to the person skilled in the art.

The metallocene component used to prepare the metallocene polypropylene can be any bridged metallocene known in the art. Preferably it is a metallocene represented by the following general formula.

µ-R¹(C₅R²R³R⁴R⁵)(C₅R⁶R⁷R⁸R⁹)MX¹X² (I)

wherein
the bridge R¹ is -(CR¹⁰R¹¹)ₚ- or -(SiR¹⁰R¹¹)ₚ- with p = 1 or 2, preferably it is - (SiR¹⁰R¹¹)-;
M is a metal selected from Ti, Zr and Hf, preferably it is Zr;
X¹ and X² are independently selected from the group consisting of halogen, hydrogen, C₁-C₁₀ alkyl, C₆-C₁₅ aryl, alkylaryl with C₁-C₁₀ alkyl and C₆-C₁₅ aryl;
R², R³, R⁴, R⁵, R⁶, R⁷, R⁸, R⁹, R¹⁰ and R¹¹ are each independently selected from the group consisting of hydrogen, C₁-C₁₀ alkyl, C₅-C₇ cycloalkyl, C₆-C₁₅ aryl, alkylaryl with C₁-C₁₀ alkyl and C₆-C₁₅ aryl, or any two neighboring R may form a cyclic saturated or non-saturated C₄-C₁₀ ring; each R², R³, R⁴, R⁵, R⁶, R⁷, R⁸, R⁹, R¹⁰ and R¹¹ may in turn be substituted in the same way.

The preferred metallocene components are represented by the general formula (I), wherein
the bridge R¹ is SiR¹⁰R¹¹;
M is Zr;
X¹ and X² are independently selected from the group consisting of halogen, hydrogen, and C₁-C₁₀ alkyl; and
(C₅R²R³R⁴R⁵) and (C₅R⁶R⁷R⁸R⁹) are indenyl of the general formula C₉R¹²R¹³R¹⁴R¹⁵R¹⁶R¹⁷R¹⁸R¹⁹ wherein R¹², R¹³, R¹⁴, R¹⁵, R¹⁶, R¹⁷, R¹⁸ and R¹⁹ are each independently selected from the group consisting of hydrogen, C₁-C₁₀ alkyl, C₅-C₇ cycloalkyl, C₆-C₁₅ aryl, and alkylaryl with C₁-C₁₀ alkyl and C₆-C₁₅ aryl, or any two neighboring R may form a cyclic saturated or non-saturated C₄-C₁₀ ring;
R¹⁰ and R¹¹ are each independently selected from the group consisting of C₁-C₁₀ alkyl, C₅-C₇ cycloalkyl, and C₆-C₁₅ aryl, or R¹⁰ and R¹¹ may form a cyclic saturated or non-saturated C₄-C₁₀ ring; and
each R¹⁰, R¹¹, R¹², R¹³, R¹⁴, R¹⁵, R¹⁶, R¹⁷, R¹⁸ and R¹⁹ may in turn be substituted in the same way.

Particularly suitable metallocenes are those having C₂-symmetry.

Examples of particularly suitable metallocenes are:
dimethylsilanediyl-bis(cyclopentadienyl)zirconium dichloride,
dimethylsilanediyl-bis(2-methyl-cyclopentadienyl)zirconium dichloride,
dimethylsilanediyl-bis(3-methyl-cyclopentadienyl)zirconium dichloride,
dimethylsilanediyl-bis(3-tert-butyl-cyclopentadienyl)zirconium dichloride,
dimethylsilanediyl-bis(3-tert-butyl-5-methyl-cyclopentadienyl)zirconium dichloride,
dimethylsilanediyl-bis(2,4-dimethyl-cyclopentadienyl)zirconium dichloride,
dimethylsilanediyl-bis(indenyl)zirconium dichloride,
dimethylsilanediyl-bis(2-methyl-indenyl)zirconium dichloride,
dimethylsilanediyl-bis(3-methyl-indenyl)zirconium dichloride,
dimethylsilanediyl-bis(3-tert-butyl-indenyl)zirconium dichloride,
dimethylsilanediyl-bis(4,7-dimethyl-indenyl)zirconium dichloride,
dimethylsilanediyl-bis(tetrahydroindenyl)zirconium dichloride,
dimethylsilanediyl-bis(benzindenyl)zirconium dichloride,
dimethylsilanediyl-bis(3,3'-2-methyl-benzindenyl)zirconium dichloride,
dimethylsilanediyl-bis(4-phenyl-indenyl)zirconium dichloride,
ethylene-bis(indenyl)zirconium dichloride,
ethylene-bis(tetrahydroindenyl)zirconium dichloride,
isopropylidene-(3-tert-butyl-5-methyl-cyclopentadienyl)(fluorenyl) zirconium dichloride.

The polymerization of propylene and one or more optional comonomers in presence of a metallocene-based catalytic system can be carried out according to known techniques in one or more polymerization reactors. The metallocene polypropylene of the present invention is preferably produced by polymerization in liquid propylene at temperatures in the range from 20°C to 100°C. Preferably, temperatures are in the range from 60°C to 80°C. The pressure can be atmospheric or higher. It is preferably between 25 and 50 bar. The molecular weight of the polymer chains, and in consequence the melt flow of the metallocene polypropylene, is regulated by the addition of hydrogen to the polymerization medium.

The metallocene polypropylene of the present invention is characterized by a melt flow index in the range from 1 to 2000 dg/min (as measured according to ISO 1133, condition L, at 230°C under 2.16 kg). When used for fiber spinning the melt flow of the metallocene polypropylene is in the range from 5 dg/min to 40 dg/min. When used in the spunbonding process the melt flow of the metallocene polypropylene is at least 10 dg/min, preferably at least 12, 14, 16, 18 or 20 dg/min. When used in the spunbonding process the melt flow of the metallocene polypropylene is at most 300 dg/min, preferably at most 200 dg/min, more preferably at most 150 dg/min, even more preferably at most 100 dg/min and most preferably at most 60 dg/min. When used in the melt blown process the melt flow of the metallocene polypropylene is at least 100 dg/min, preferably at least 150 dg/min, more preferably at least 200 dg/min, even more preferably at least 250 dg/min and most preferably at least 300 dg/min. When used in the melt blown process the melt flow of the metallocene polypropylene is at most 2000 dg/min, preferably at most 1800 dg/min, more preferably at most 1600 dg/min, and most preferably at most 1400 dg/min.

The metallocene polypropylene used in the present invention is characterized by a xylene solubles content of less than 3 wt%, preferably of less than 2.5 wt%, and most preferably of less than 2 wt%. The xylene solubles content is determined by dissolving the polypropylene in refluxing xylene, cooling of the solution to 25°C, filtering the solution, and subsequent evaporation of the solvent. The residue, which is the xylene soluble portion of the polypropylene, is then dried and weighed.

The metallocene polypropylene used in the present invention is characterized by a high isotacticity, for which the content of mmmm pentads is a measure. The content of mmmm pentads is at least 90 %, preferably at least 92 %, 94 %, 95 %, 96 % or 97 %. The isotacticity is determined by NMR analysis according to the method described by G.J. Ray et al. in Macromolecules, vol. 10, n° 4, 1977, p. 773-778.

For the present invention it is essential that the metallocene polypropylene comprises a nucleating agent, i.e. that the metallocene polypropylene is a nucleated metallocene polypropylene. For the purposes of the present invention we define a nucleating agent as a chemical compound that raises the crystallization temperature of metallocene polypropylene. Nucleated polypropylenes and their use in fiber and nonwoven applications are well known in the art.

For example, European patent application EP-A-0569860 discloses a thermally bonded spunbond web of thermoplastic filaments and a nonwoven fabric laminate comprising an internal layer of meltblown thermoplastic fibers sandwiched between two layers of spunbond thermoplastic filaments. The spunbond web and the spunbond layers of the fabric laminate consist of thermoplastic filaments that are formed from a mixture of a thermoplastic polymer and a nucleating agent. In the preferred embodiment the spunbond web is made of polypropylene comprising 0.1 to 0.3 % by weight of nucleating agent. The spunbond web and the laminates comprising it are characterized by enhanced durability.

Patent application WO 97/30199 discloses polyolefin fibers or filaments comprising 0.01 - 20 % by weight of inorganic particles. These fibers can also be used to make nonwovens. The polyolefin can for example be a polypropylene. The inorganic particles can be talc, kaolin, calcium carbonate, mica, wollastonite, calcium sulphate and barium sulphate. The incorporation of inorganic particles allows for increased productivity in the production of thermal bonded nonwovens. Further, the fibers and nonwovens are characterized by a reduction of static electricity.

Patent application WO 02/094926 discloses fibers and fabrics made from polypropylene comprising a nucleating agent. These fibers and fabrics are characterized by low-shrink behavior.

However, none of these prior art documents discloses fibers or nonwovens comprising a nucleated metallocene polypropylene nor do they disclose a process for the production of fibers, filaments or nonwovens from a nucleated metallocene polypropylene.

The nucleating agent used in the present invention can be any of the nucleating agents known to the skilled person. It is, however, preferred that the nucleating agent be selected from the group consisting of talc, carboxylate salts, sorbitol acetals, phosphate ester salts, substituted benzene tricarboxamides and polymeric nucleating agents, as well as blends of these.

The carboxylate salts used as nucleating agents in the present invention can be organocarboxylic acid salts. Particular examples are sodium benzoate and lithium benzoate. The organocarboxylic acid salts may also be alicyclic organocarboxylic acid salts, preferably bicyclic organodicarboxylic acid salts and more preferably a bicyclo[2.2.1]heptane dicarboxylic acid salt. A nucleating agent of this type is sold as HYPERFORM® HPN-68 by Milliken Chemical.

Examples for sorbitol acetals are dibenzylidene sorbitol (DBS), bis(p-methyl-dibenzylidene sorbitol) (MDBS), bis(p-ethyl-dibenzylidene sorbitol) and bis(3,4-dimethyl-dibenzylidene sorbitol) (DMDBS). Bis(3,4-dimethyl-dibenzylidene sorbitol) (DMDBS) is preferred. These can for example be obtained from Milliken Chemical under the trade names of Millad 3905, Millad 3940 and Millad 3988.

Examples of phosphate ester salts are salts of 2,2'-methylene-bis-(4,6-di-tert-butylphenyl)phosphate. Such phosphate ester salts are for example available as NA-11 or NA-21 from Asahi Denka.

Examples of substituted tricarboxamides are those of general formula (I) 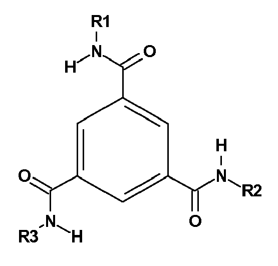 wherein R1, R2 and R3, independently of one another, are selected from C₁-C₂₀ alkyls, C₅-C₁₂ cycloalkyls, or phenyl, each of which may in turn by substituted with C₁-C₂₀ alkyls, C₅-C₁₂ cycloalkyls, phenyl, hydroxy, C₁-C₂₀ alkylamino or C₁-C₂₀ alkyloxy etc. Examples for C₁-C₂₀ alkyls are methyl, ethyl, n-propyl, n-butyl, iso-butyl, tert-butyl, n-pentyl, iso-pentyl, 1,1-dimethylpropyl, 1,2-dimethylpropyl, 3-methylbutyl, hexyl, heptyl, octyl or 1,1,3,3-tetramethylbutyl. Examples for C₅-C₁₂ cycloalkyl are cyclopentyl, cyclohexyl, cyclooctyl, cyclododecyl, adamantyl, 2-methylcyclohexyl, 3-methylcyclohexyl or 2,3-dimethylcyclohexyl. Such nucleating agents are disclosed in WO 03/102069 and by Blomenhofer et al. in Macromolecules 2005, 38, 3688-3695.

Examples of polymeric nucleating agents are polymeric nucleating agents containing vinyl compounds, which are for example disclosed in EP-A1-0152701 and EP-A2-0368577. The polymeric nucleating agents containing vinyl compounds can either be physically or chemically blended with the metallocene polypropylene. In physical blending the polymeric nucleating agent containing vinyl compounds is mixed with the metallocene polypropylene in an extruder or in a blender. In chemical blending the metallocene polypropylene comprising the polymeric nucleating agent containing vinyl compounds is produced in a polymerization process having at least two stages, in one of which the polymeric nucleating agent containing vinyl compounds is produced. Preferred vinyl compounds are vinyl cycloalkanes or vinyl cycloalkenes having at least 6 carbon atoms, such as for example vinyl cyclopentane, vinyl-3-methyl cyclopentane, vinyl cyclohexane, vinyl-2-methyl cyclohexane, vinyl-3-methyl cyclohexane, vinyl norbornane, vinyl cylcopentene, vinyl cyclohexene, vinyl-2-methyl cyclohexene. The most preferred vinyl compounds are vinyl cyclopentane, vinyl cyclohexane, vinyl cyclopentene and vinyl cyclohexene.

Further examples of polymeric nucleating agents are poly-3-methyl-1-butene, polydimethylstyrene, polysilanes and polyalkylxylenes. As explained for the polymeric nucleating agents containing vinyl compounds, these polymeric nucleating agents can be introduced into the metallocene polypropylene either by chemical or by physical blending.

It is also possible to use high-density polyethylene, such as for example Rigidex HD6070EA, available from INEOS Polyolefins, or a polypropylene having a fractional melt flow, or a polypropylene that comprises a fraction of fractional melt flow.

Further, it is possible to use blends of nucleating agents, such as for example a blend of talc and a phosphate ester salt or a blend of talc and a polymeric nucleating agent containing vinyl compounds.

While it is clear to the skilled person that the amount of nucleating agent to be added depends upon its crystallization efficiency, for the purposes of the present invention the nucleating agent or the blend of nucleating agents is present in the metallocene polypropylene in an amount of at least 50 ppm, preferably at least 100 ppm. It is present in an amount of at most 5000 ppm, preferably of at most 4000 ppm, even more preferably of at most 3000 ppm and most preferably of at most 2000 ppm.

The nucleated metallocene polypropylene, i.e. the metallocene polypropylene comprising a nucleating agent, used in the present invention has a crystallization temperature that is at least 3°C higher than the crystallization temperature of the respective non-nucleated metallocene polypropylene. Preferably, the crystallization temperature of the nucleated metallocene polypropylene is at least 4°C, 5°C, 6°C, 7°C, 8°C, 9°C or 10°C higher than the crystallization temperature of the respective non-nucleated metallocene polypropylene.

The as-spun fibers and filaments of the present invention consist of one, two or more components, so as to form mono-, bi- or multi-component fibers and filaments, which may in turn be comprised in nonwovens. Each of the components may in turn comprise one or more constituents, i.e. the components may be blends. Said constitutents are selected from thermoplastic polymers, such as polyethylene, Ziegler-Natta polypropylene or metallocene polypropylene with the provision that at least one of the constituents comprises a nucleated metallocene polypropylene, i.e. a metallocene polypropylene comprising a nucleating agent. The nucleated metallocene polypropylene is preferably comprised in a component that at least partially forms the surface of the multi-component fibers and filaments. For the percentage of nucleated metallocene polypropylene in a component, it is preferred that the nucleated metallocene polypropylene is comprised in at least 50 % by weight of at least one of the components of the as-spun fibers and filaments of the present invention, more preferably in at least 60, 70, 80, 90, 95 or 99 % by weight based on the weight of the respective component.

The nucleating agent may be introduced into the metallocene polypropylene by blending a metallocene polypropylene and a nucleating agent either in pure form or in form of a masterbatch, for example by dry-blending or by meltblending. It is within the scope of the present invention that the nucleating agent can be introduced into the metallocene polypropylene by blending metallocene polypropylene and a nucleated thermoplastic polymer, wherein said thermoplastic polymer is different from metallocene polypropylene.

Fibers, filaments and nonwovens produced with a nucleated metallocene polypropylene according to the present invention are characterized by improved properties. In particular, the mechanical properties of a spunbond nonwoven made according to the present invention are improved as compared to a prior art nonwoven, for example made with a non-nucleated metallocene polypropylene.

The results obtained for the fibers, filaments and nonwovens made in accordance with the present invention are particularly surprising in light of the hypotheses that have been used to explain the improved properties of fibers and nonwovens made with metallocene polypropylene as compared to those made with polypropylenes produced with a Ziegler-Natta catalyst. Without wishing to be bound by theory it is believed that the advantage of metallocene polypropylene in fiber and nonwoven production, and particularly in the production of spunbond nonwovens, is due to a delay in the onset of crystallization. The incorporation of a nucleating agent into the metallocene polypropylene, which results in faster crystallization, therefore runs counter to what has been used to explain the better performance of metallocene polypropylene as compared to Ziegler-Natta polypropylene in spunbond nonwovens.

It has been very surprisingly found that a spunbond nonwoven made in accordance with the present invention, i.e. using a nucleated metallocene polypropylene, is not only characterized by increased tensile strength but also by an elongation that is at least equal to that of a spunbond nonwoven made using the non-nucleated metallocene polypropylene. This fact is particularly surprising in light of the general knowledge that an increase in tensile strength normally leads to a decrease in elongational properties and vice versa.

The nucleated metallocene polypropylene used in the present invention may further comprise other additives such as, by way of example, antioxidants, light stabilizers, acid scavengers, lubricants, antistatic additives, and colorants.

The polypropylene fibers and filaments of the present invention can be used in carpets, woven textiles, and nonwovens.

The polypropylene spunbond nonwovens of the present invention as well as composites or laminates comprising it can be used for hygiene and sanitary products, such as for example diapers, feminine hygiene products and incontinence products, products for construction and agricultural applications, medical drapes and gowns, protective wear, lab coats etc.

The polypropylene meltblown nonwovens of the present invention can be used in hygiene, filtration and absorption applications, such as diapers, feminine hygiene products, incontinence products, wraps, gowns, masks, filters, absorption pads etc. Frequently polypropylene meltblown nonwovens are used in combination with other nonwovens, such as for example spunbond nonwoven to form composites, which in turn may be used in the cited applications.

### Examples

### TEST METHODS

The melt flow index was measured according to norm ISO 1133, condition L, using a weight of 2.16 kg and a temperature of 230 °C.

Fiber tenacity and elongation were measured on a Lenzing Vibrodyn according to norm ISO 5079:1995 with a testing speed of 10 mm/min.

Tensile strength and elongation of the nonwoven were measured according to ISO 9073-3:1989.

Melting and crystallization temperatures as well as the respective enthalpies were measured on a DSC 2690 instrument by TA Instruments. To erase the thermal history the samples were first heated to 200°C and kept at 200°C for a period of 3 minutes. The reported melting temperatures and crystallization temperatures were then determined with heating and cooling rates of 20°C/min.

### POLYPROPYLENES

Nonwovens in accordance with the present invention were produced from PP1 and PP2, which are nucleated metallocene polypropylenes. Comparative nonwovens were produced from PP3, which is a metallocene polypropylene without nucleating agent, and from PP4, which is a nucleated Ziegler-Natta polypropylene. The properties of these polypropylenes are given in table 1.

**Table 1**

| | | PP1 | PP2 | PP3 Comp. ex. | PP4 Comp. ex. |
|---|---|---|---|---|---|
| Catalyst | | Met | Met | Met | ZN |
| MFI | dg/min | 25 | 25 | 25 | 35 |
| Nucleating agent | | Talc 1500 ppm | DMDBS 1500 ppm | - | Talc 1000 ppm |
| Tm | °C | 151.8 | 153.9 | 150.4 | 160.2 |
| ΔHm | J/g | 98.8 | 97.7 | 97.3 | 101.3 |
| Tc | °C | 116.5 | 124.0 | 110.2 | 117.0 |
| ΔHc | J/g | 111.5 | 103.6 | 88.4 | 94.4 |

All polypropylenes were additivated with a sufficient amount of antioxidants and acid scavengers to reduce their degradation during processing.

### SPUNBOND NONWOVENS

Polypropylenes PP1 to PP4 were used to produce spunbond nonwovens on a 1.1 m wide Reicofil 4 line with a single beam having about 6800 holes per meter length, the holes having a diameter of 0.6 mm. Throughput per hole was set at 0.41 g/hole/min. Line speed was kept at 300 m/min. The nonwovens had a fabric weight of 12 g/m². The nonwovens were thermally bonded using an embossed roll. Further processing conditions are given in table 3. The calender temperature reported in table 3 is the bonding temperature at which the highest values for max. tensile strength were obtained. The calender temperature was measured on the embossed roll using a contact thermocouple. Properties of the nonwovens obtained under these conditions are shown in table 4, with MD denoting "machine direction" and CD "cross direction".

**Table 3**

| | | PP1 | PP2 | PP3 Comp. ex. | PP4 Comp. ex. |
|---|---|---|---|---|---|
| Melt temperature at the die | °C | 250 | 250 | 250 | 250 |
| Cabin pressure | Pa | 8000 | 8000 | 8000 | 8000 |
| Calender temperature for max. tensile strength | °C | 149 | 147 | 143 | 143 |

The results clearly show that the spunbond nonwovens made using the nucleated metallocene polypropylenes of the present invention have increased tensile strength in machine direction as well as in the cross direction. Surprisingly, the increase in tensile strength was not accompanied by a drop in elongation.

**Table 4**

| | | PP1 | PP2 | PP3 Comp. ex. | PP4 Comp. ex. |
|---|---|---|---|---|---|
| Filament titer | den | 1.14 | 1.11 | 1.20 | 1.13 |
| Tensile strength @ max MD | N/5cm | 36.6 | 38.1 | 35.3 | 30.1 |
| Tensile strength @ max CD | N/5cm | 18.2 | 21.2 | 16.5 | 16.5 |
| Elongation MD | % | 60.4 | 66.9 | 60.6 | 60.3 |
| Elongation CD | % | 60.2 | 69.4 | 56.4 | 69.4 |

## Claims

1. As-spun fibers and filaments comprising a nucleated metallocene polypropylene.

2. As-spun fibers and filaments according to claim 1, wherein the nucleated metallocene polypropylene has a crystallization temperature of at least 3°C higher than the crystallization temperature of the respective metallocene polypropylene without any nucleating agent.

3. As-spun fibers and filaments according to claim 1 or claim 2, wherein the nucleated metallocene polypropylene comprises at least 50 ppm, preferably at least 100 ppm of a nucleating agent and at most 5000, preferably at most 4000, 3000 or 2000 ppm of a nucleating agent.

4. As-spun fibers and filaments according to any of claims 1 to 3, wherein the nucleated metallocene polypropylene comprises a nucleating agent selected from the group consisting of talc, carboxylate salts, sorbitol acetals, phosphate ester salts, substituted benzene tricarboxamides and polymeric nucleating agents containing vinyl compounds, as well as blends of these.

5. Nonwoven comprising the as-spun fibers and filaments of any of claims 1 to 4.

6. Nonwoven according to claim 5, wherein the nonwoven is a spunbond nonwoven or a melt blown nonwoven, preferably a spunbond nonwoven.

7. Nonwoven according to claim 4 or claim 5, wherein the nonwoven is made of mono-component filaments.

8. Laminates comprising the nonwoven of claims 5 to 7.

9. Laminates according to claim 8, wherein the nonwoven of claims 5 to 7 is laminated to a polyolefin film, preferably a polyethylene film.

10. Hygiene and sanitary articles comprising the nonwoven of claims 5 to 7 or the laminate of claims 8 to 9.

11. Process for the production of as-spun fibers and filaments, said process comprising the steps of
(a) providing a blend comprising a metallocene polypropylene and a nucleating agent,
(b) feeding the blend of step (a) to an extruder,
(c) subsequently melt-extruding the blend to obtain a molten polymer stream,
(d) extruding the molten polymer stream of step (c) from a number of fine, usually circular, capillaries of a spinneret, thus obtaining filaments of molten polymer, and
(e) subsequently rapidly reducing the diameter of the filaments obtained in the previous step to a final diameter.

12. Process for the production of multicomponent as-spun fibers and filaments, said process comprising the steps of
(a1) providing a first blend comprising a metallocene polypropylene and a nucleating agent to a first extruder,
(a2) providing at least one further blend comprising a thermoplastic polymer,
(b1) feeding each of the blends of steps (a1) and (a2) to a separate extruder,
(c1) consecutively melt-extruding the blends to obtain a molten polymer stream for each blend,
(d1) co-extruding the molten polymer streams of step (c1) from a number of fine capillaries of a spinneret, thus obtaining multicomponent filaments of molten polymer, and
(e) subsequently rapidly reducing the diameter of the filaments obtained in the previous step to a final diameter.

13. Process according to claim 11 or claim 12, wherein the nucleated metallocene polypropylene has a crystallization temperature of at least 3°C higher than the crystallization temperature of the respective metallocene polypropylene without any nucleating agent.

14. Process according to claim 11 to 13, wherein the nucleated metallocene polypropylene comprises at least 50 ppm, preferably at least 100 ppm of a nucleating agent and at most 5000, preferably at most 4000, 3000 or 2000 ppm of a nucleating agent.

15. Process according to any of claims 11 to 14, wherein the nucleated metallocene polypropylene comprises a nucleating agent selected from the group consisting of talc, carboxylate salts, sorbitol acetals, phosphate ester salts, substituted benzene tricarboxamides and polymeric nucleating agents containing vinyl compounds, as well as blends of these.

16. Process according to any of claims 11 to 15, further comprising the steps of
(f) collecting the filaments obtained in step (e) on a support, and
(g) subsequently bonding the collected filaments to form a bonded nonwoven.

17. Process according to any of claims 11 to 16, further comprising the step of (h) laminating a film to the bonded nonwoven obtained in step (g).
